(19) **Europäisches Patentamt**
**European Patent Office**
**Office européen des brevets**

(11) **EP 3 984 683 B1**

(12) **EUROPEAN PATENT SPECIFICATION**

(45) Date of publication and mention
of the grant of the patent:
**23.10.2024 Bulletin 2024/43**

(21) Application number: **20826449.9**

(22) Date of filing: **17.06.2020**

(51) International Patent Classification (IPC):
***B23K 20/12*** *(2006.01)*

(52) Cooperative Patent Classification (CPC):
**B23K 20/12; B23K 20/227;** B23K 2103/04;
F16B 5/08; F16B 9/01

(86) International application number:
**PCT/JP2020/023837**

(87) International publication number:
**WO 2020/256030 (24.12.2020 Gazette 2020/52)**

(54) **JOINT AND METHOD OF MANUFACTURE OF JOINT**

VERBINDUNG UND VERFAHREN ZUR HERSTELLUNG EINER VERBINDUNG

JOINT ET PROCÉDÉ DE FABRICATION D'UN JOINT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2019 JP 2019112004**

(43) Date of publication of application:
**20.04.2022 Bulletin 2022/16**

(73) Proprietor: **NIPPON STEEL CORPORATION
Chiyoda-ku
Tokyo 100-8071 (JP)**

(72) Inventors:
• **MATSUI, Sho
Tokyo 100-8071 (JP)**
• **YOSHINAGA, Chisato
Tokyo 100-8071 (JP)**
• **KODAMA, Shinji
Tokyo 100-8071 (JP)**

(74) Representative: **Vossius & Partner
Patentanwälte Rechtsanwälte mbB
Siebertstraße 3
81675 München (DE)**

(56) References cited:
JP-A- 2000 510 768     JP-A- 2003 166 037
US-A1- 2002 125 297     US-A1- 2010 077 587

**Description**

FIELD

The present invention relates to a joint jointed by friction welding.

BACKGROUND

As means for joining a plurality of metal sheets, the art is known of joining a superposed plurality of metal sheets using rivets or other connecting members.

In particular, in recent years, the art of joining a superposed top sheet and bottom sheet by making a connecting element rotate while pressing it against the top surface of the top sheet so as to pass it through the top sheet and thereby friction weld the connecting element and the bottom sheet has been studied.

For example, PTL 1 discloses the art of joining two sheet materials differing in strength, such as an aluminum sheet and steel sheet, by a process of friction welding using a rivet or other joining element (that is, a connecting element having a head part and shaft part). Specifically, the art of joining two sheet materials with different strengths through the following process is disclosed.

That is, the two sheet materials are superposed with the sheet material with the lower strength as the top sheet, a connecting element supported by a holder is set on the top surface of the top sheet, and the connecting element is made to rotate while making it move downward toward the inside part of the top sheet and press against it. At this time, rotation of the connecting element causes strong friction to occur between the connecting element and the top sheet whereby the front end part of the connecting element is heated, so the top sheet softens and it becomes possible for the connecting element to penetrate the top sheet.

If the front end part of the connecting element rotating while penetrating the top sheet in this way reaches the top surface of the bottom sheet, a process of friction welding proceeds between the shaft part of the connecting element and the bottom sheet whereby the shaft part of the connecting element and the bottom sheet are friction welded. Due to this, the connecting element and the bottom sheet are jointed at the friction welded part (jointed part) and the top sheet is secured between the head part of the connecting element and the bottom sheet.

[CITATIONS LIST]

[PATENT LITERATURE]

[PTL 1] Japanese Unexamined Patent Publication No. 2011-62748

SUMMARY

[TECHNICAL PROBLEM]

Not limited to the art of this PTL 1, in a joint formed by the art of friction welding a steel rod to a steel sheet (friction stud welding) etc., there was the problem that if using a steel sheet with a particularly high carbon content (for example, high strength steel sheet with a tensile strength of over 980 MPa etc.), the strength of the friction welded part (jointed part) ended up falling and as a result the joint strength as a joint ended up decreasing.

Therefore, the present invention relates to a joint jointed by friction welding and has as its object the provision of a joint excellent in joint strength.

[SOLUTION TO PROBLEM]

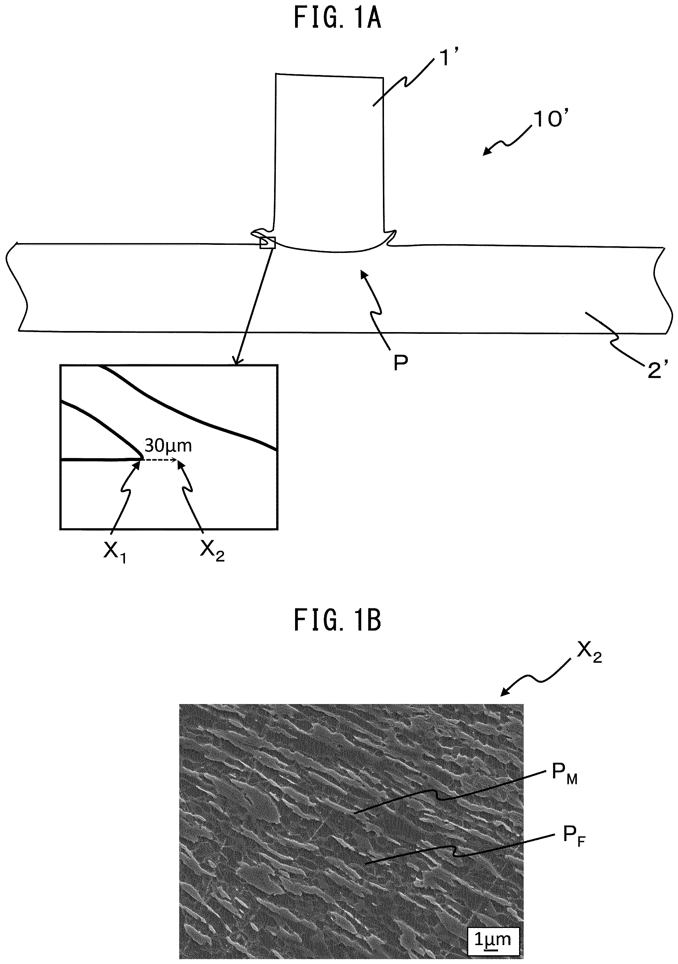

The inventors investigated in detail the cause by which a joint jointed by friction welding falls in joint strength. It was thought that the cause was the metal structure near the jointed part of the steel sheet (end part of jointed part) formed by plastic deformation of the steel sheet, as shown in FIG. 1, being comprised of a nonhomogeneous metal structure of two phases including a hard phase (mainly martensite phase $P_M$) and a soft phase softer than the hard phase (mainly ferrite phase $P_F$) (below, simply referred to as "two phase structure"). It is believed that local strain easily concentrates at the interface of the hard phase and soft phase of the two phase structure and ductile fracture is easily caused.

Therefore, the inventors discovered that by making the metal structure at the end part of the jointed part at the steel sheet a predetermined homogeneous structure, local strain concentration is eliminated and the joint strength as a joint is improved and thereby completed the present invention.

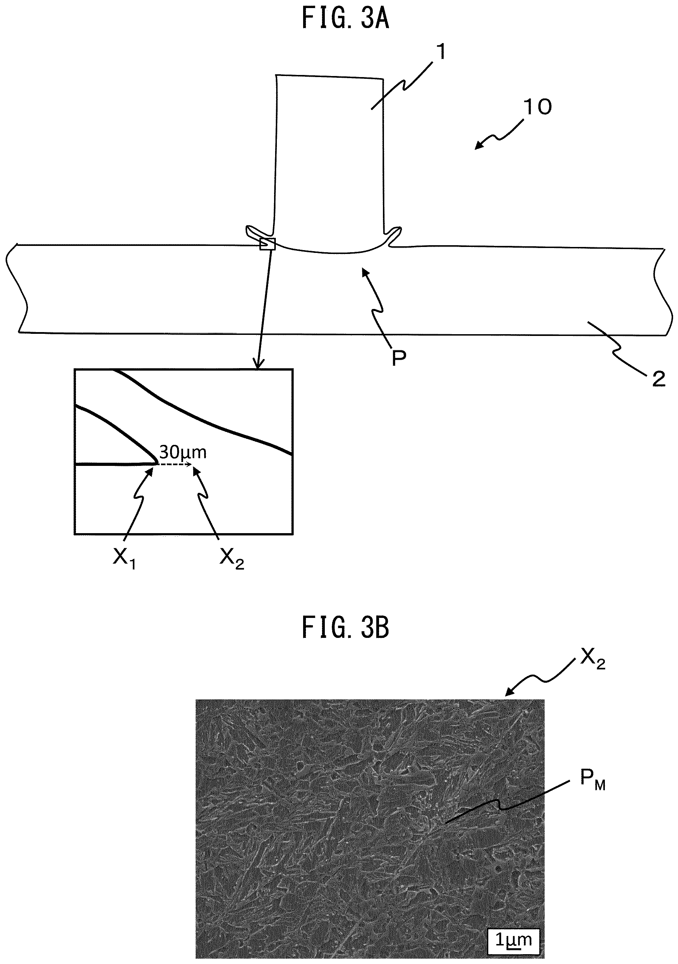

Here, the "end part of the jointed part" indicates a corner part formed by the surface of the steel sheet and the plastically deformed steel sheet (part shown by notation $X_1$ of FIG. 1A and FIG. 3A). Further, the "metal structure of the end part of the jointed part" indicates the metal structure inside the steel sheet at 30 $\mu$m inside from the end part of the jointed part on the extension line of the surface of the steel sheet (part shown by notation $X_2$ of FIG. 1A and FIG. 3A).

Specific aspects of the present invention are as follows:

[1] A joint comprising a steel material having a shaft part and a steel sheet, a top surface of the steel sheet jointed to the steel material by friction welding, the steel sheet having a metal structure with a martensite area ratio of 80% or more at an end part of a jointed part with the shaft part of the steel material.

[2] The joint according to [1], wherein the joint comprises a HAZ softened part.

[3] The joint according to [1] or [2], wherein the steel sheet contains carbon in 0.15 mass% or more.

[4] The joint according to any one of [1] to [3], wherein a top surface of the steel sheet has at least one sheet material among a plastic sheet and a metal sheet superposed on the top surface and the shaft part of the steel material is passed through the sheet material and jointed with the steel sheet by friction welding.

[5] The joint according to [4], wherein the steel material has a head part with a cross-sectional diameter larger than the shaft part at an end part at an opposite side to the jointed part, and the sheet material is gripped between the steel sheet and the head part of the steel material.

[6] The joint according to any one of [1] to [5] wherein a tensile strength of the steel sheet is 500 MPa or more.

[7] A method of production of the joint according to any of [1] to [6] comprising a friction welding step of making the steel material press while rotating the steel material against a top surface of the steel sheet, in the friction welding step, a pressing force F (kN) and rotational speed R (rpm) when pressing the steel material against the top surface of the steel sheet satisfying the following formula (1) to formula (3):

$$F \geq 0.45 \times D^2 - 0.5 \dots (1)$$

When

$$D < 12, R \geq 36000/D - 1000 \dots (2)$$

When

$$D \geq 12, R \geq 2000 \dots (3).$$

The "D" in the formula (1) to formula (3) indicates a diameter (mm) of a circle of a vertical cross-section of the shaft part if the shaft part is a circular column and a diameter (mm) of a smallest enclosing circle of a polygonal shape of a vertical cross-section of the shaft part if the shaft part is a polygonal column.

[8] The method of manufacture of a joint according to [7], wherein a tensile strength of the steel sheet is 500 MPa or more.

[ADVANTAGEOUS EFFECTS OF INVENTION]

According to the present invention, it is possible to provide a joint jointed by friction welding which is excellent in joint strength.

BRIEF DESCRIPTION OF DRAWINGS

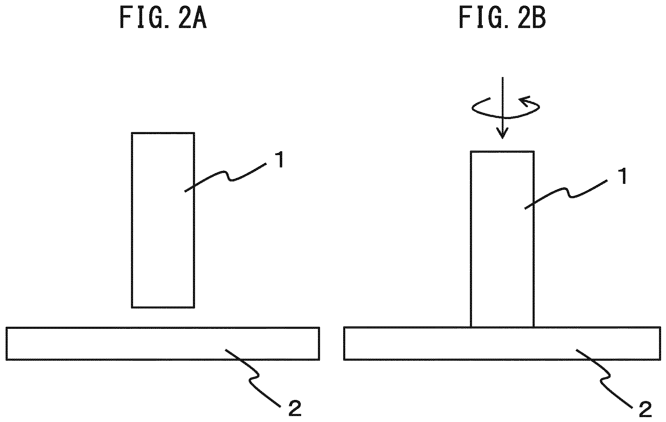

FIGS. 1A and 1B are views showing a conventional joint 10' jointed by friction welding. FIG. 1A is a cross-sectional view of a jointed part P of the conventional joint 10' and parts near it, while FIG. 1B is an electron micrograph showing a metal structure of an end part of the jointed part P at the conventional joint 10' (part shown by notation $X_2$ of FIG. 1A). FIGS. 2A and 2B are schematic views for explaining the method of manufacture of a joint 10 according to one embodiment of the present invention. FIG. 2A shows the state before the steel material 1 and steel sheet 2 start to be jointed, while FIG. 2B shows the state of making the steel material 1 rotate while making it move downward to press it against the steel sheet 2.

FIGS. 3A and 3B are views showing a joint 10 according to one embodiment of the present invention. FIG. 3A is a cross-sectional view of a jointed part P of the joint 10 and parts near it, while FIG. 3B is an electron micrograph showing a metal structure of an end part of the jointed part P at the joint 10 (part shown by notation $X_2$ of FIG. 3A).

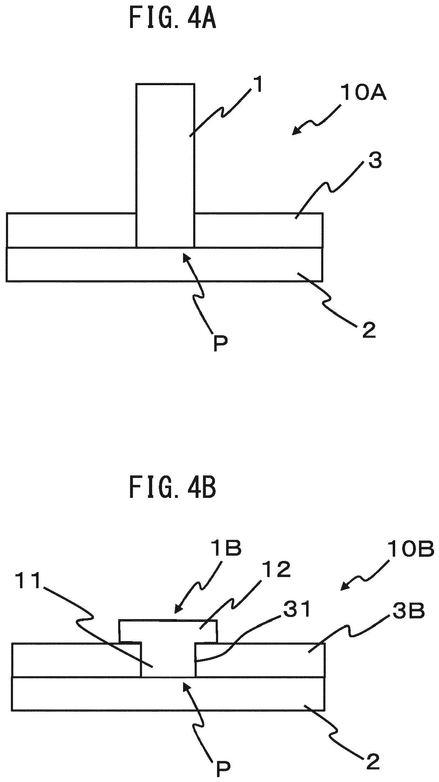

FIGS. 4A and 4B are schematic views for explaining a joint according to another embodiment of the present invention. FIG. 4A is a view showing a joint 10A comprised of a steel material 1 passed through a sheet material 3 (top sheet) and a steel sheet 2 (bottom sheet) jointed by friction welding, while FIG. 4B is a view showing a joint 10B comprised of a rivet-shaped steel material 1B passed through a through hole 31 of a sheet material 3B (top sheet) and a steel sheet 2 (bottom sheet) jointed by friction welding.

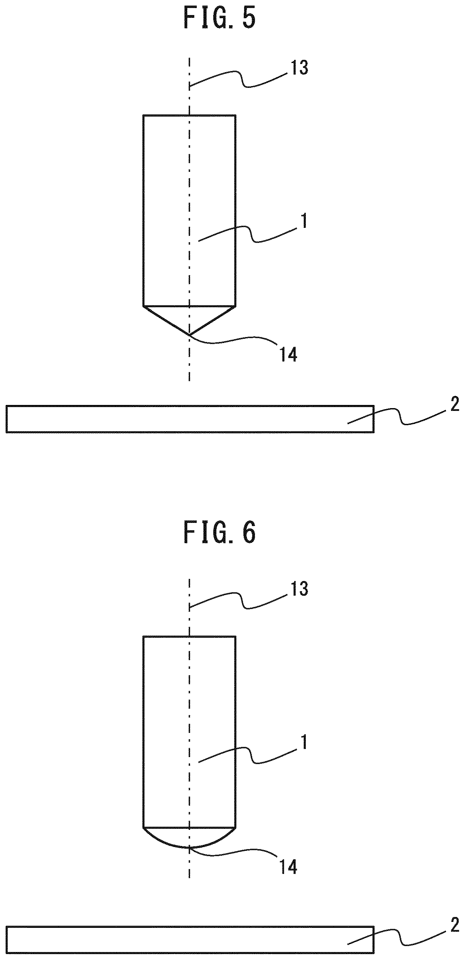

FIG. 5 is a schematically showing a steel material in the case where a lower side front end part of the shaft part is conical shaped as an example of a steel material able to be used for the joint of the present invention.

FIG. 6 is a schematically showing a steel material in the case where a lower side front end part of the shaft part is spherical shaped as another example of a steel material able to be used for the joint of the present invention.

DESCRIPTION OF EMBODIMENTS

Below, preferred embodiments of the joint of the present invention will be explained in detail while referring to the drawings.

Joint

As shown in FIG. 3A, the joint 10 according to one embodiment of the present invention is comprised of a rod-shaped steel material 1 having a circular columnar shaft part and a steel sheet 2. A lower side front end part of the shaft part of the steel material 1 (bottom surface) and the steel sheet 2 are jointed by friction welding.

Further, the steel sheet 2 of the joint 10, as shown in FIG. 3B, has a metal structure with a martensite area ratio of 80% or more at the end part of the jointed part P of the lower side front end part of the shaft part of the steel material 1 and the steel sheet 2.

In this way, in the joint 10 of the present embodiment, the metal structure of the end part of the jointed part P at the steel sheet 2 is a metal structure with a martensite area ratio of 80% or more, that is, a metal structure comprised of homogeneous martensite $P_M$ where local strain concentration at the interface of a soft phase and a hard phase hardly ever occurs, so excellent joint strength can be exhibited.

Note that, the joint 10 not only achieves a high joint strength due to the homogeneous metal structure of the above-mentioned martensite $P_M$, but also can reduce the variation in joint strength.

The metal structure with a martensite area ratio of 80% or more can contain retained austenite and other phases besides martensite $P_M$ if a 20% or less area ratio. Further, the metal structure of the end part of the jointed part preferably has an area ratio of martensite $P_M$ of 90% or more, more preferably 95% or more. If the area ratio of martensite $P_M$ is 90% or more or further 95% or more, a high joint strength can be obtained more stably.

Note that, a metal structure with a martensite area ratio of 80% or more of an end part of a jointed part at a steel sheet can be confirmed by cutting the jointed part of the joint along the sheet thickness direction, polishing and etching the cut surface, then examining the surface enlarged by a scanning electron microscope. In examining the surface after etching enlarged, a field of observation of a size of 20 $\mu$m$\times$20 $\mu$m or more centered on a position inside the steel sheet by a depth of 30 $\mu$m from the end part of the jointed part on an extension line of the surface of the steel sheet (that is, the part shown by notation $X_2$ of FIG. 1A and FIG. 3A) is observed enlarged.

Such a metal structure with a martensite area ratio of 80% or more can be obtained by friction welding the steel material and steel sheet under the later explained predetermined pressing force and rotational speed conditions to thereby make the base material structure of the steel sheet (specifically, the structure of the end part of the jointed part) transform to martensite through austenite transformation.

Further, such a metal structure with a martensite area ratio of 80% or more can be obtained by heating and quenching (hardening) the joint as a whole after friction welding the steel material and steel sheet.

However, heating and quenching of the joint as a whole are not preferable since even the base material part not subjected to the heat history of the joining operation ends up being hardened and the properties of the base material end up being damaged. Therefore, from the viewpoint of not having heating and quenching of the joint as a whole cause widespread damage to the properties of the base material, the presence of a HAZ softened part is preferable.

The joint as a whole not being heated and quenched can be confirmed by checking for the presence of a HAZ softened part formed at the time of joining. A "HAZ softened part" indicates a region which is tempered by the heat input at the time of joining and is lower in hardness than the base material part which is not affected by the heat. Therefore, if heating and quenching the joint as a whole after friction welding, the HAZ softened part is also hardened so the HAZ softened part disappears. The presence of a HAZ softened part can be confirmed by measuring the hardness distribution from the base material part to the center of the friction welded part at a position of 0.2 mm depth in the sheet thickness direction from the friction welded surface of the steel sheet. The measurement load at this time is made, for example, 200 g and the measurement interval is made 0.2 mm. In the measured hardness distribution, the hardness becomes smaller the closer to the center of the friction welded part from the base material part. If a high hardness region hardened by the friction welding is seen after this, it can be judged that a HAZ softened part is present and simultaneously it can be judged that it has not been hardened by heating and quenching of the joint as a whole.

To obtain a metal structure with a martensite area ratio of 80% or more, the steel sheet preferably contains carbon in 0.15 mass% or more. The content of carbon is more preferably 0.20 mass% or more, more preferably 0.25 mass% or more.

Method of Manufacture of Joint

The joint of the present invention can, for example, by obtained by a method of manufacture including the following friction welding step.

Note that, in explaining such a method of manufacture, the method of manufacture of the joint 10 of the above embodiment is used illustratively.

Friction Welding Step

As shown in FIGS. 2A and 2B, the steel material 1 is made to rotate while making it move to the lower side to make the lower side front end part of the shaft part of the steel material 1 contact the top surface of the steel sheet 2. By adjusting the rotational speed and pressing force of the steel material 1 after the lower side front end part of the shaft part of the steel material 1 contacts the top surface of the steel sheet 2, it is possible to make heat of friction be generated between the steel material 1 and steel sheet 2 whereby the lower side front end part of the shaft part of the steel material 1 and the steel sheet 2 are friction welded.

Regarding the various conditions in this friction welding step, the inventors ran experiments changing the various pressing forces, rotational speeds, and radii of the steel materials for steel sheets of various constituents and expressed the obtained results by regression formulas.

That is, a steel material 1 where, in the friction welding step, a pressing force F (kN) and rotational speed R (rpm) when pressing it against the top surface of the steel sheet 2 satisfies the following formula (1) to formula (3) is employed.

$$F \geq 0.45 \times D^2 - 0.5 ... (1)$$

When

$$D < 12, R \geq 36000/D - 1000 ... (2)$$

When

$$D \geq 12, R \geq 2000 ... (3)$$

The "D" in the formula (1) to formula (3) indicates a diameter (mm) of a circle of a vertical cross-section of the shaft part if the shaft part is a circular column and a diameter (mm) of a smallest enclosing circle of a polygonal shape of a vertical cross-section of the shaft part if the shaft part is a polygonal column.

In this friction welding step, by friction welding the steel material 1 and steel sheet 2 by a specific pressing force and rotational speed satisfying the above formula (1) to formula (3), the heat input to the steel sheet 2 rises and a friction welded part (jointed part P) is formed between the shaft part of the steel material 1 and the steel sheet 2. Along with this, the structure of the end part of the jointed part P at the steel sheet 2 transforms to martensite through austenite transformation whereby a metal structure with the above-mentioned martensite area ratio of 80% or more is formed.

In this way, a joint 10 such as shown in FIG. 3A comprised of a steel material 1 and a steel sheet 2 jointed through a jointed part P is obtained.

Note that, the pressing force and rotational speed are similar in embodiments where the steel material is other than a rod shape (for example, an embodiment of a rivet shape etc.)

Further, if, as explained later, the joint includes a sheet material as the top sheet, in the same way as the above, the steel material can be made to rotate while pressing against the steel sheet by a specific pressing force and rotational speed satisfying the above formula (1) to formula (3) so as to obtain a similar joint.

Note that, the upper limit value of the pressing force F is not particularly prescribed, but if the pressing force is high, the manufacturing facility ends up becoming larger in size, so 500 kN or less is preferable.

Further, the upper limit value of the rotational speed R is not particularly prescribed, but raising the rotational speed under high pressing force conditions is difficult, so when D<12, it is preferably 15000 rpm or less and when D≥12, it is preferably 5000 rpm or less.

Below, the various component members used for the joint of the present invention will be explained.

Steel Material

In the joint 10 of the above-mentioned embodiment, as the steel material, a rod-shaped steel material 1 having a circular columnar shaft part is illustratively used, but in the present invention, the shape of the steel material is not limited. For example, as the shape of the shaft part of the steel material, a circular column, polygonal column, etc. may be mentioned. Note that, to stably perform the friction welding, the shape of the shaft part of the steel material is preferably a circular column or pentagonal or higher regular polygonal column.

Therefore, as the steel material, for example, a rod-shaped steel material having a circular columnar or polygonal columnar shaft part, a rivet-shaped steel material having a circular columnar or polygonal columnar shaft part and a head part provided at an upper side end part of the shaft part and with a cross-sectional diameter larger than the shaft part, etc. may be used.

That is, as the steel material, a rod, rivet, etc. generally used as a connecting element in the field can be employed. For example, one of a solid structure or hollow structure disclosed in the above-mentioned PTL 1 etc. can be employed.

Note that, in the later mentioned joint 10B accordingly to another embodiment of the present invention shown in FIG. 4B, a rivet-shaped steel material 1B is used as the steel material. In this joint 10B, the rivet-shaped steel material 1B has a shaft part 11 extending from the jointed part P and a head part 12 positioned at an upper side end part of the shaft part 11 and having a cross-sectional diameter larger than the shaft part 11, so the sheet material 3B arranged at the top sheet can be gripped by the head part 12 and steel sheet 2 (bottom sheet) of the steel material 1B and more strongly fastened. Further, the joint strength of the friction welded part (jointed part P) of the steel material 1B and steel sheet 2 is also excellent, so it is possible to exhibit a more excellent joint strength as the joint of the sheet material 3B and steel sheet 2.

If using such a rivet-shaped steel material, the diameter of the head part is preferably 1.5 times the diameter of the shaft part. Further, from the viewpoints of the ease of pressing against the steel sheet (bottom sheet) etc., the length of the shaft part is preferably 1.5 times or more the sheet thickness of the sheet material (top sheet) (if there are a plurality of top sheets, the total sheet thickness). Here, the diameters of the shaft part and head part mean the diameters of those parts if the cross-sectional shapes in the planar direction perpendicular to the direction of extension of the shaft part are circular and mean the diameters of the smallest circumscribing circles if they are polygonal.

Note that, as the diameter of the shaft part of the steel material, for example, a less than 20 mm diameter may be mentioned. Preferably a diameter of 3.0 mm to 8.0 mm may be mentioned.

Further, regarding the grade of the steel material, if steel, the type or strength etc. are not particularly limited.

Steel Sheet

In the joint 10 of the above-mentioned embodiment, as the steel sheet, a flat sheet- shaped steel sheet 2 is used.

The steel sheet is not particularly limited so long as a steel sheet able be friction welded with the steel material, but if using a sheet material as the top sheet, it is preferable to use a steel sheet having a tensile strength of the tensile strength of that sheet material or more.

The specific strength of the steel sheet is not particularly limited. For example, a 500 MPa or more tensile strength may be mentioned, but if using a high strength steel sheet (high carbon content steel sheet) with a tensile strength of over 980 MPa, the joint strength easily falls, so the present invention is particularly advantageous if using such a high strength steel sheet.

Note that, the tensile strength of the steel sheet is preferably 1180 MPa or more.

The tensile strength of the steel sheet is measured by taking for example a JIS No. 5 tensile test piece from a location not affected by the heat due to friction welding in the steel sheet and running a tensile test based on JIS Z2241: 2011. If a JIS No. 5 tensile test piece cannot be taken due to the jointed part or member shape, it is also possible to employ shapes of tensile test pieces of steel sheet set down in various standards. Further, if it is not possible to obtain a tensile test piece set down in the various standards, it is possible to divide the sheet thickness by 4 from the steel sheet surface at a cross-section of a location not affected by heat due to the friction welding, measure the Vickers hardness at a position of a depth of exactly that value, and use a value of 3.27 times that as the tensile strength of the steel sheet (unit: MPa) instead.

Further, as the steel sheet, a plated steel sheet or coated steel sheet or other surface-treated steel sheet may be used.

Note that, regarding the structure of the steel sheet, it is sufficient that at least the part to be jointed have a sheet-shaped structure. The steel sheet as a whole need not have a sheet-shaped structure.

Sheet Material

At the joints 10A and 10B of other embodiments of the present invention shown in FIGS. 4A and 4B, sheet materials 3 and 3B are superposed as the top sheet on the top surface of a steel sheet 2 (bottom sheet) and a shaft part of a rod-shaped steel material 1 and a shaft part 11 of a rivet-shaped steel material 1B are passed through that sheet materials 3 and 3B and are jointed with the steel sheet 2 by friction welding. Note that, at the joint 10B shown in FIG. 4B, the sheet material 3B is gripped by the head part 12 of the rivet-shaped steel material 1B and the steel sheet 2.

In this way, as the sheet material (top sheet) superposed on the top surface of the steel sheet, one through which the steel material (specifically, the shaft part of the steel material) can be passed and which can be friction welded with the steel sheet can be used. For example, it is possible to use a plastic sheet, metal sheet, etc. Here, as the metal sheet, for example, aluminum sheet, aluminum alloy sheet, or other light metal sheet, steel sheet, etc. may be mentioned. As the plastic sheet, for example, in addition to polypropylene, polyethylene, etc., carbon fiber reinforced plastic (CFRP) or another composite material may be mentioned.

Note that, as such a sheet material, a plurality of the same types of or different types of sheet materials may also be used superposed.

The joint of the present invention can exhibit excellent joint strength as a joint of the sheet material (top sheet) and steel sheet (bottom sheet) even if one including such diverse sheet materials (top sheet), so the joint strength of the friction welded part (jointed part) of the steel material and steel sheet (bottom sheet) is excellent.

Note that, if using a steel sheet as the sheet material (top sheet), the steel material and the steel sheet forming the bottom sheet can be more reliably friction welded, so it is preferable to use a steel sheet with a tensile strength lower than the steel sheet forming the bottom sheet as the top sheet.

Further, in this sheet material as well, it is sufficient that at least the part to be jointed have a sheet-shaped structure. The sheet material as a whole need not have a sheet-shaped structure.

Furthermore, the sheet material may also have a through hole at a location scheduled for the steel material to be passed through from the viewpoint of the joint strength, joint precision, etc. Note that, if there are a plurality of sheet materials, all of the sheet materials may have such through holes or only some of the sheet materials may have through holes.

If the sheet material is provided with a through hole, the diameter of the through hole may be larger than or smaller than the shaft part of the steel material so long as the shaft part of the steel material can pass through it at the time of friction welding.

Other Embodiments

Below, other embodiments of the present invention differing in the type of the steel material or sheet material from the joint 10 of the above-mentioned embodiment will be explained while referring to the drawings.

Note that, the constitutions other than the constitutions differing from the joint 10 are basically similar to the joint 10, so explanations will be omitted.

In the embodiment shown in FIG. 4A, the joint 10A is comprised of a rod-shaped steel material 1 comprised of only a circular columnar shaft part, a steel sheet 2 (bottom sheet), and a sheet material 3 (top sheet) comprised of an aluminum sheet.

This joint 10A has the sheet material 3 superposed on the top surface of the steel sheet 2, has the rod-shaped steel material 1 passed through the sheet material 3 from the upper side, and has the lower side front end part (bottom surface) of the steel material 1 and steel sheet 2 jointed by friction welding.

Note that, in this joint 10A, the rod-shaped steel material 1 does not have a head part, so the sheet material 3 is not gripped between the rod-shaped steel material 1 and steel sheet 2.

Furthermore, in the embodiment shown in FIG. 4B, the joint 10B is comprised of a rivet-shaped steel material 1B having a circular columnar shaft part 11 and a head part 12 with a cross-sectional diameter larger than that shaft part 11 and a sheet material 3B (top sheet) provided with a steel sheet 2 (bottom sheet) and a through hole 31 having a diameter smaller than the shaft part 11 at the location where the shaft part 11 of the steel material 1B is to be passed.

This joint 10B has the sheet material 3B superposed on the top surface of the steel sheet 2, has the shaft part 11 of the rivet-shaped steel material 1B passed through the inside of the through hole 31 of the sheet material 3B from the upper side, and has the lower side front end part (bottom surface) of the shaft part 11 of the steel material 1B and the steel sheet 2 jointed by friction welding.

In each of the joints 10A and 10B of these embodiments as well, the steel sheet 2 has a metal structure with a martensite area ratio of 80% or more at end part of the jointed part P of the shaft part of the rod-shaped steel material 1 or the shaft part 11 of the rivet-shaped steel material 1B and the steel sheet 2, so in the same way as the above-mentioned joint 10, local strain concentration is suppressed and excellent joint strength can be exhibited.

Further, in the present invention, the front end part of the shaft part of the steel material may have a conical shape or pyramidal shape or may have a curved surface such as a spherical shape. Here, FIG. 5 schematically shows, as an example of a steel material able to be used for the joint of the present invention, a steel material in the case where the lower side front end part of the shaft part is a conical shape, while FIG. 6 schematically shows, as another example of a steel material, a steel material in the case where the lower side front end part of the shaft part is a spherical shape.

Note that, if the front end part of the shaft part of the steel material has such a three-dimensional shape (that is, a conical shape or pyramidal shape, spherical shape, or other shape), the position of the vertex 14 of that three-dimensional shape, as shown in FIG. 5 and FIG. 6, is preferably on the center axis 13 of the shaft part. If the position of the vertex 14 is on the center axis 13 of the shaft part, it is possible to stably make heat of friction be generated and it becomes easy for friction welding to be performed.

Note that, the joint of the present invention is not limited to the above-mentioned embodiments or the later explained examples etc. and can be suitably combined, substituted, changed, etc. within a range not deviating from the object and gist of the present invention.

EXAMPLES

Below, invention examples and comparative examples will be illustrated to explain the present invention more concretely, but the present invention is not limited to only such invention examples.

As the steel materials, steel rods with diameters differing in the range of 4.0 to 6.0 mm (all having lengths of 7 mm and tensile strengths of 1000 MPa) were used. As the steel sheets, steel sheets with amounts of carbon of 0.35 mass% (tensile strengths of 1500 MPa) or with amounts of carbon of 0.14 mass% (tensile strengths of 1000 MPa) (all steel sheets having sheet thicknesses of 1.6 mm) were used. Friction welding was used to join the steel materials and the steel sheets to fabricate the joints of Invention Examples 1 to 5 and Comparative Examples 1 to 6.

However, in Invention Example 4, the jointed joint was heated and quenched (hardened). Specifically, the joint as a whole was heated to 900°C, held there for 300 seconds, then quenched.

Furthermore, the prepared joints of Invention Examples 1 to 5 and Comparative Examples 1 to 6 were used to validate the relationship between the metal structures of the end parts of the jointed parts at the steel sheets and the joint strengths.

Note that, the pressing forces and rotational speeds at the time of friction welding are as shown in the following Table 1. The upset length at the time of friction welding is 2.5 mm in each case.

The metal structures of the end parts of the jointed parts were confirmed by cutting the jointed parts of the joints and parts near them, polishing and etching the cut cross-sections, then examining them enlarged by a scanning electron microscope.

Further, the joint strengths of the joints were obtained by pulling away the jointed rods in a vertical direction from the steel sheets. The maximum loads (kN) when the jointed parts were made to fracture were measured.

The diameters of the rods (shaft parts of steel materials), the pressing forces and rotational speeds at the time of friction welding, the metal structures of the jointed parts, and the results of measurement of the joint strengths are as shown in the following Table 1.

Further, the presences of HAZ softened parts at the joints were confirmed by measuring the distributions of hardness from the base material parts to the centers of the insides of the friction welded parts at positions of 0.2 mm depths in the sheet thickness directions from the friction welded surfaces of the steel sheets.

The presences of HAZ softened parts and amounts of carbon of the steel sheets (mass%) are as shown in the following Table 2.

[Table 1]

Table 1

| | | Rod diameter D (mm) | Pressing force F (kN) | Required pressing force $0.45 \times D^2 - 0.5$ (kN) | Rotational speed R (rpm) | Required rotational speed 36000/D-1000 (rpm) | Martensite area ratio of end part of jointed part (%) | Joint strength (kN) |
|---|---|---|---|---|---|---|---|---|
| Inv. ex. | Inv. Ex. 1 | 4.0 | 7.0 | 6.7 | 8000 | 8000 | 86 | 4.9 |
| | Inv. Ex. 2 | 4.5 | 9.0 | 8.6 | 8000 | 7000 | 98 | 6.0 |
| | Inv. Ex. 3 | 6.0 | 16.0 | 15.7 | 6000 | 5000 | 92 | 7.8 |
| | Inv. Ex. 4 | 4.5 | 9.0 | 8.6 | 8000 | 7000 | 96 | 5.3 |
| | Inv. Ex. 5 | 4.5 | 9.0 | 8.6 | 8000 | 7000 | 81 | 7.2 |
| Comp. ex. | Comp. Ex. 1 | 4.0 | <u>5.5</u> | 6.7 | <u>6000</u> | 8000 | 31 | 2.9 |
| | Comp. Ex. 2 | 4.5 | <u>7.0</u> | 8.6 | <u>6000</u> | 7000 | 32 | 3.2 |
| | Comp. Ex. 3 | 4.5 | 9.0 | 8.6 | <u>5000</u> | 7000 | 43 | 3.9 |
| | Comp. Ex. 4 | 4.5 | <u>6.0</u> | 8.6 | 7000 | 7000 | 48 | 4.1 |
| | Comp. Ex. 5 | 6.0 | <u>9.0</u> | 15.7 | <u>4500</u> | 5000 | 51 | 4.5 |
| | Comp. Ex. 6 | 4.5 | <u>7.0</u> | 8.6 | <u>6000</u> | 7000 | 30 | 6.3 |

[Table 2]

Table 2

| | | | Presence of HAZ softened part | Amount of carbon of steel sheet (mass%) |
|---|---|---|---|---|
| Inv. Ex. | | Inv. Ex. 1 | Yes | 0.35 |
| | | Inv. Ex. 2 | Yes | 0.35 |
| | | Inv. Ex. 3 | Yes | 0.35 |
| | | Inv. Ex. 4 | No | 0.35 |
| | | Inv. Ex. 5 | Yes | 0.14 |
| Comp. Ex. | | Comp. Ex. 1 | Yes | 0.35 |
| | | Comp. Ex. 2 | Yes | 0.35 |
| | | Comp. Ex. 3 | Yes | 0.35 |
| | | Comp. Ex. 4 | Yes | 0.35 |
| | | Comp. Ex. 5 | Yes | 0.35 |
| | | Comp. Ex. 6 | Yes | 0.14 |

As shown in Table 1, it was learned that in the joints of invention examples where the end parts of the jointed parts of the steel sheets have metal structures with martensite area ratios of 80% or more, in each case an excellent joint strength was obtained, while in the joints of comparative examples where the end parts of the jointed parts of the steel sheets have metal structures with low martensite area ratios, in each case the joint strength was remarkably low.

INDUSTRIAL APPLICABILITY

According to the present invention, in a joint jointed by friction welding, excellent joint strength can be exhibited, so, for example, application to the manufacture of various structural parts such as body parts of automobiles or structures of buildings is possible.
Therefore, the present invention has a high applicability in industry.

REFERENCE SIGNS LIST

1. steel material
2. steel sheet
3. sheet material
P. jointed part

Claims

1.  A joint (10, 10A, 10B) comprising a steel material (1, 1B) having a shaft part, and a steel sheet (2), a top surface of the steel sheet (2) jointed to the steel material (1, 1B) by friction welding,
    the steel sheet (2) having a metal structure with a martensite area ratio of 80% or more at an end part of a jointed part (P) with the shaft part of the steel material (1, 1B).

2.  The joint (10, 10A, 10B) according to claim 1, wherein the joint (10, 10A, 10B) comprises a HAZ softened part.

3. The joint (10, 10A, 10B) according to claim 1 or 2, wherein the steel sheet (2) contains carbon in 0.15 mass% or more.

4. The joint (10A, 10B) according to any one of claims 1 to 3, wherein

a top surface of the steel sheet (2) has at least one sheet material (3, 3B) among a plastic sheet and a metal sheet superposed on the top surface and
the shaft part of the steel material (1, 1B) is passed through the sheet material (3, 3B) and jointed with the steel sheet (2) by friction welding.

5. The joint (10B) according to claim 4, wherein

the steel material (1B) has a head part (12) with a cross-sectional diameter larger than the shaft part at an end part at an opposite side to the jointed part (P), and
the sheet material (3B) is gripped between the steel sheet (2) and the head part (12) of the steel material (1B).

6. The joint (10, 10A, 10B) according to any one of claims 1 to 5, wherein a tensile strength of the steel sheet (2) is 500 MPa or more.

7. A method of production of the joint (10, 10A, 10B) according to any one of claims 1 to 6 comprising a friction welding step of making the steel material (1, 1B) press while rotating the steel material (1, 1B) against a top surface of the steel sheet (2),
in the friction welding step, a pressing force F (kN) and rotational speed R (rpm) when pressing the steel material (1, 1B) against the top surface of the steel sheet (2) satisfying the following formula (1) to formula (3):

$$F \geq 0.45 \times D^2 - 0.5 \ldots (1)$$

When

$$D < 12, \ R \geq 36000/D - 1000 \ldots (2)$$

When

$$D \geq 12, \ R \geq 2000 \ldots (3).$$

The "D" in the formula (1) to formula (3) indicates a diameter (mm) of a circle of a vertical cross-section of the shaft part if the shaft part is a circular column and a diameter (mm) of a smallest enclosing circle of a polygonal shape of a vertical cross-section of the shaft part if the shaft part is a polygonal column.

8. The method of production of a joint (10, 10A, 10B) according to claim 7, wherein a tensile strength of the steel sheet (2) is 500 MPa or more.

**Patentansprüche**

1. Verbindung (10, 10A, 10B), die ein Stahlmaterial (1, 1B) mit einem Schaftteil und ein Stahlblech (2) aufweist, wobei eine Oberseite des Stahlblechs (2) durch Reibungsschweißen mit dem Stahlmaterial (1, 1B) verbunden ist und das Stahlblech (2) eine Metallstruktur mit einem Martensitflächenverhältnis von mindestens 80 % an einem Endteil eines Verbindungsteils (P) mit dem Schaftteil des Stahlmaterials (1, 1B) aufweist.

2. Verbindung (10, 10A, 10B) nach Anspruch 1, wobei die Verbindung (10, 10A, 10B) einen WEZ-erweichten Teil aufweist.

3. Verbindung (10, 10A, 10B) nach Anspruch 1 oder 2, wobei das Stahlblech (2) einen Kohlenstoffgehalt von 0,15 Masseprozent oder mehr aufweist.

**4.** Verbindung (10A, 10B) nach einem der Ansprüche 1 bis 3, wobei eine Oberseite des Stahlblechs (2) mindestens ein Folienmaterial (3, 3B) aus einer Kunststofffolie und einer Metallfolie aufweist, das auf die Oberseite aufgebracht ist, und
der Schaftteil des Stahlmaterials (1, 1B) durch das Folienmaterial (3, 3B) hindurchgeführt und durch Reibungsschweißen mit dem Stahlblech (2) verbunden wird.

**5.** Verbindung (10B) nach Anspruch 4, wobei

das Stahlmaterial (1B) einen Kopfteil (12) mit einem größeren Querschnittsdurchmesser als der Schaftteil an einem Endteil auf einer dem Verbindungsteil (P) gegenüberliegenden Seite aufweist, und
das Folienmaterial (3B) zwischen dem Stahlblech (2) und dem Kopfteil (12) des Stahlmaterials (1B) erfasst wird.

**6.** Verbindung (10, 10A, 10B) nach einem der Ansprüche 1 bis 5, wobei eine Zugfestigkeit des Stahlblechs (2) mindestens 500 MPa beträgt.

**7.** Verfahren zur Herstellung der Verbindung (10, 10A, 10B) nach einem der Ansprüche 1 bis 6, das einen Reibungsschweißschritt aufweist, bei dem das Stahlmaterial (1, 1B) unter Drehung des Stahlmaterials (1, 1B) gegen eine Oberseite des Stahlblechs (2) gepresst wird,

beim Reibungsschweißschritt eine Presskraft F (kN) und eine Drehzahl R (U/min) beim Pressen des Stahlmaterials (1, 1B) gegen die Oberseite des Stahlblechs (2) den folgenden Formeln (1) bis (3) entsprechen:

$$F \geq 0{,}45 \times D^2 - 0{,}5 \ldots (1)$$

wenn

$$D < 12, R \geq 36000/D - 1000 \ldots (2)$$

wenn

$$D \geq 12, R \geq 2000 \ldots (3).$$

Das "D" in den Formeln (1) bis (3) gibt einen Durchmesser (mm) eines Kreises eines vertikalen Querschnitts des Schaftteils an, wenn es sich bei dem Schaftteil um eine kreisförmige Säule handelt, und gibt einen Durchmesser (mm) eines kleinsten umschließenden Kreises einer polygonalen Form eines vertikalen Querschnitts des Schaftteils an, wenn es sich bei dem Schaftteil um eine polygonale Säule handelt.

**8.** Verfahren zur Herstellung einer Verbindung (10, 10A, 10B) nach Anspruch 7, wobei die Zugfestigkeit des Stahlblechs (2) mindestens 500 MPa beträgt.

**Revendications**

**1.** Joint (10, 10A, 10B) comprenant un matériau en acier (1, 1B) ayant une partie arbre, et une feuille d'acier (2), une surface supérieure de la feuille d'acier (2) étant assemblée au matériau en acier (1, 1B) par soudage par friction, la feuille d'acier (2) ayant une structure métallique avec un rapport de surface de martensite de 80 % ou plus au niveau d'une partie extrémité d'une partie assemblée (P) avec la partie arbre du matériau en acier (1, 1B).

**2.** Joint (10, 10A, 10B) selon la revendication 1, dans lequel le joint (10, 10A, 10B) comprend une partie ramollie de HAZ.

**3.** Joint (10, 10A, 10B) selon la revendication 1 ou 2, dans lequel la feuille d'acier (2) contient du carbone à raison de 0,15 % en masse ou plus.

**4.** Joint (10A, 10B) selon l'une quelconque des revendications 1 à 3, dans lequel

une surface supérieure de la feuille d'acier (2) présente au moins un matériau en feuille (3, 3B) parmi une feuille de plastique et une feuille métallique superposé sur la surface supérieure et
la partie arbre du matériau en acier (1, 1B) est passée à travers le matériau en feuille (3, 3B) et assemblé à la feuille d'acier (2) par soudage par friction.

5. Joint (10B) selon la revendication 4, dans lequel

le matériau en acier (1B) a une partie tête (12) avec un diamètre de section transversale supérieur à la partie arbre au niveau d'une partie d'extrémité au niveau d'un côté opposé à la partie assemblée (P), et
le matériau en feuille (3B) est serré entre la feuille d'acier (2) et la partie tête (12) du matériau en acier (1B).

6. Joint (10, 10A, 10B) selon l'une quelconque des revendications 1 à 5, dans lequel une résistance à la traction de la feuille d'acier (2) est de 500 MPa ou plus.

7. Procédé de production du joint (10, 10A, 10B) selon l'une quelconque des revendications 1 à 6 comprenant une étape de soudage par friction consistant à presser le matériau en acier (1, 1B) tout en faisant tourner le matériau en acier (1, 1B) contre une surface supérieure de la feuille d'acier (2),

dans l'étape de soudage par friction, une force de pression F (kN) et une vitesse de rotation R (tr/min) lors de la pression du matériau en acier (1, 1B) contre la surface supérieure de la feuille d'acier (2) satisfaisant la formule (1) à la formule (3) suivantes :

$$F \geq 0{,}45 \times D^2 - 0{,}5 \dots (1)$$

lorsque

$$D < 12, R \geq 36000/D - 1000 \dots (2)$$

lorsque

$$D \geq 12, R \geq 2000 \dots (3),$$

« D » dans la formule (1) à la formule (3) indique un diamètre (mm) d'un cercle d'une section transversale verticale de la partie arbre si la partie arbre est une colonne circulaire et un diamètre (mm) d'un cercle le plus petit entourant une forme polygonale d'une section transversale verticale de la partie arbre si la partie arbre est une colonne polygonale.

8. Procédé de production d'un joint (10, 10A, 10B) selon la revendication 7, dans lequel une résistance à la traction de la feuille d'acier (2) est de 500 MPa ou plus.

## FIG. 1A

## FIG. 1B

FIG. 2A

FIG. 2B

1

2

1

2

# FIG. 3A

# FIG. 3B

## FIG. 4A

## FIG. 4B

# FIG. 5

# FIG. 6

**EP 3 984 683 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011062748 A